# EUROPEAN PATENT SPECIFICATION

(11) **EP 1 956 318 B1**
(45) Date of publication and mention of the grant of the patent: **08.04.2015**
(21) Application number: 08380034.2
(22) Date of filing: 08.02.2008
(51) Int. Cl.: F24J 2/26, F24J 2/32, F24J 2/46

(54) **Solar collector with heat dissipator**
Sonnenkollektor mit Wärmeableiter
Collecteur solaire avec dissipateur de chaleur

(30) Priority: 09.02.2007 ES 200700355; 04.02.2008 ES 200800294
(43) Date of publication of application: 13.08.2008
(73) Proprietor: Rojo Sastre, Juan Jose, 28035 Madrid (ES)
(72) Inventor: Rojo Sastre, Juan Jose, 28035 Madrid (ES)
(74) Representative: Garcia-Cabrerizo y del Santo, Pedro Maria

(56) References cited:
- WO-A1-01/51209
- FR-A- 2 544 843
- JP-A- 8 042 983
- JP-A- 58 069 362
- JP-A- 58 150 752
- JP-A- 58 182 054
- JP-A- S58 156 160
- US-A- 3 996 919
- US-A- 4 080 957
- US-A- 4 232 656
- US-A1- 2004 069 459

## Description

### FIELD OF THE INVENTION

The present invention is encompassed within the Solar Collector technology sector and relates to a new excess heat dissipation system for Solar Collectors aimed at increasing the reliability of such devices.

### STATE OF THE ART

The well-known problem of "STAGNATION" is common to all solar collectors. When the energy received by the collector is not used in the secondary circuit because there is no consumption of hot water, the solar energy increases the temperature of the water in the collector above its normal working point, whereby the water contained in the solar collection pipes reaches a temperature above 150°C, which is harmful to the Solar Installation. This phenomenon is known as STAGNATION.

Stagnation is particularly problematic in climates with higher ambient temperatures and a greater number of sun hours.

One of the solutions offered by the market to solve the problem of STAGNATION consists of using more resistant materials, which entails an increase in cost. Another possibility consists of curving the glass panel to allow self-cooling, but this option is not sufficiently effective. Another option is that of incorporating a cooling valve that diverts the water from the primary circuit to another circuit that is cooled by means of forced ventilation using an aerogenerator, but this only increases the number of parts required and the space occupied by the unit, in addition to device costs.

The purpose of JPS58156160 is to release an abnormally raised temperature efficiently and to obtain a device at low cost by a method wherein an annular heat pipe comprising an evaporation section and a heat radiating section is attached to a header pipe. The solar heat collector of JPS58156160 has a header pipe and a plurality of vacuum tube type heat collecting members connected to the former, the annular heat pipe comprising the evaporation section and the heat radiating section is attached to the header pipe. As a result, the danger of causing the thermal deterioration of the selective adsorbing surface of the heat pipe is reduced and the degree of expansion and contraction of the heat pipe due to its thermal expansion is reduced to thereby improve the reliability of a vacuum sealing section. Further, due to the fact that the heat pipe is made annular, it can be manufactured at low cost without the provision of a specific wick for promoting the circulation of an operating fluid through the pipe and it is possible to operate the heat pipe correctly for the prevention of dry durning no matter what test is conducted on the heat collector. Further, in case where a vacuum tube type heat collector is designed, it is not necessary to estimate a temperature rise at the time of dry burning.

US2004069459 discloses a cooling device having improved cooling performance and providing higher flexibility, an electronic apparatus and an acoustic apparatus employing the cooling device, and a method for producing the cooling device. The cooling device is provided with an evaporator that is capable of cooling an object to be cooled, and a condenser that is capable of releasing to the outside heat that has been absorbed during the cooling by the evaporator. A vapor-phase conduit and a liquid-phase conduit, both of which are made of fluorocarbon resin and through which an operating medium flows, are disposed between and coupled to the evaporator and the condenser, thereby circulating the operating medium.

WO0151209 discloses a laboratory temperature-regulating device for regulating the temperature of reaction mixtures. Said device comprises a thermostatic block which is connected to at least one cooling device and to at least one heating device. The thermostatic block has a temperature sensor which controls the temperature of said thermostatic block using a regulator. The temperature-regulating device is characterised in that at least one of the devices is thermally connected to the thermostatic block via a two-phase heat transport device, in which the phases are pumped with the help of a capillary material.

The present invention is aimed at offering a new solution to the previously expounded problems and, as mentioned earlier, several papers have been published for the same purpose, although none of these, not even the inventions registered to date, offer the possibility of incorporating a device that is inserted within the solar collector and which allows the heat to be dissipated in order to prevent the temperature from reaching undue or undesired levels, is low-cost and does not increase the space occupied by the unit.

### DESCRIPTION OF THE INVENTION

The grounds of the invention are based on the incorporation of an evaporation chamber to the Solar Collector, which is connected to a condensation chamber by means of silicone pipes that house a thermal valve. This system allows heat to be dissipated by means of state change (vaporization), thereby reducing the temperature of the collection pipe, which contains the hot water, when the stagnation phenomenon is produced.

The main advantages of the present invention are, on one hand, its low manufacturing cost and simplicity. On the other, it prevents the temperature of the collection pipe from rising excessively without having to incorporate any kind of external device to the Solar Collector box.

When the water in the boiling chamber comes into contact with the collection pipe, it is heated during operation of the device when the sun shines. In the case of stagnation, the water in the collection pipe is heated and, upon reaching a temperature of 100°C, a thermal valve in the dissipator is opened, whereupon part of the water in the boiling chamber is vaporized. The heat transferred to the water, to change its state, cools the collection pipe, limiting its temperature to approximately 100°C, while there is still water remaining in the chamber. In the condensation chamber, the water vapor returns to its liquid state, transferring the heat released during the change of state to the atmosphere through the metal solar collector case.

Another variant of the solar dissipator reduces thermal resistance considerably by disposing, within the solar collector, several heat dissipation devices wherein the evaporation chamber of each is in contact with the absorbent panel and disposed between every two heat transporting pipes.

The water in the boiling chamber is in contact with the absorbent panel that will be heated by the operation of the device when the sun shines. Part of the water in the evaporation chamber of each of the devices will become vapor. The heat transferred to the water to carry out its change of state shall limit the temperature of the absorbent panel, and therefore the temperature of the heat transporting pipes and the collection pipe, to approximately 100°C, while there is still liquid water remaining in the evaporation chamber. In the condensation chamber, the water vapor returns to its liquid state, transferring the heat released during the change of state to the atmosphere through the rear panel of the solar collector.

### DESCRIPTION OF THE DRAWINGS

For the purpose of complementing the preceding description and to help towards a better understanding of the characteristics of the invention, a more detailed description of a preferred embodiment is provided below, based on a set of drawings that accompany this specification, wherein the following figures have been represented in an illustrative and non-limitative manner:
Fig. 1.-Shows a schematic side view of the solar collector with the heat dissipator, wherein the evaporation chamber is in contact with the collection pipe.
Fig. 2.-Shows a perspective view of the heat dissipator described in figure 1.
Fig. 3.-Shows a schematic front view of the solar collector described in figure 1.
Fig. 4.-Shows a schematic side view of the solar collector with the solar dissipators, wherein the evaporation chamber is in contact with the absorbent panel.
Fig. 5.-Shows a view along section line II-II of figure 4.
In the preceding figures the numeric references correspond to the following parts and elements:
   1. Condensation chamber
   2. Evaporation chamber
   3. Collection pipe
   4. Silicone dissipation pipe
   5. Thermal valve
   6. Heat transporting pipe
   7. Absorbent panel
   8. Tempered glass
   9. Rock wool
   10. Water
   11. Rear panel

### DETAILED DESCRIPTION OF A PREFERRED EMBODIMENT

The invention consists of a solar collector according to claim 1.

The solar collector, as all other solar collectors available on the market, consists of a series of heat transporting pipes (6) through which water is circulated. As it flows through the pipes, the water is heated by the solar radiation that reaches the absorbent panel (7) through the tempered glass (8), both of which are separated by an air chamber. The absorbent panel (7), upon contact, transfers the thermal energy to the heat transporting pipes (6). The rock wool (9) isolates the device from the exterior, which is delimited by the rear enclosure. The heated water reaches the upper collection pipe (3) to be subsequently sent towards the exterior in order to transfer, by means of a thermal exchanger, the thermal solar energy to the secondary consumption circuit.

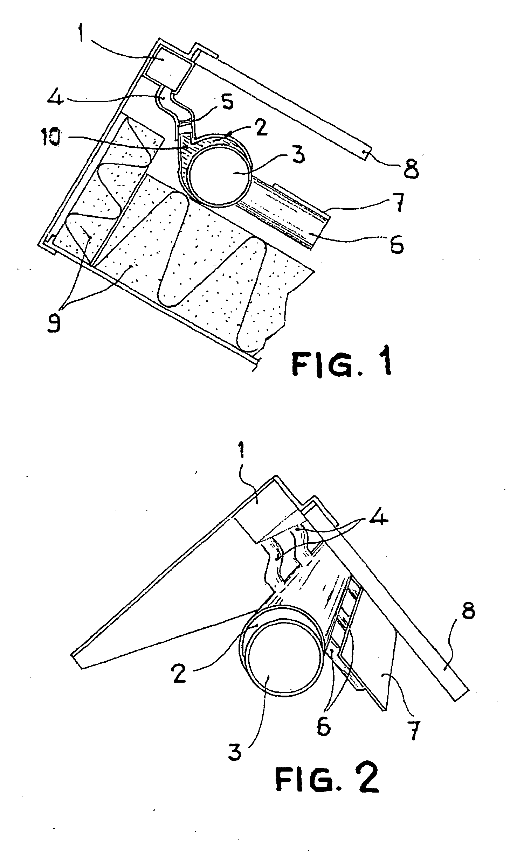

Figures 1, 2 and 3 represent a heat dissipation device inserted within a solar collector, made of an evaporation chamber (2), disposed eccentrically to the collection pipe (3), wherein there is a sufficient amount of water (10) to produce heat dissipation. The evaporation chamber (2) is connected to several dissipation pipes (4) with silicone walls, through which the water vapor produced by heat transfer from the collection pipe (3) to the water (10) in the evaporation chamber (2) flows upwards, and through which the water vapor condensed by the actuation of the condensation chamber (1) flows downwards at the same time. The walls of the dissipation pipes (4), due to their silicone-based composition, do not act as a thermal bridge when the Solar Collector functions within its working temperature. As their walls are elastic, these pipes support the slight variations in pressure that may arise and facilitate the assembly process.

When the stagnation phenomenon takes place, the water in the collection pipe (3) increases its temperature, tending towards values in excess of 150°C. At this point, the evaporation chamber (2) of the heat dissipation device starts functioning, transferring the excess heat from the collection pipe (3) to the evaporation chamber (2), causing the evaporation of the water (10) contained therein for its subsequent condensation in the condensation chamber (1), in such a manner that the heat is finally transferred to the exterior. This ensures that the temperature inside the collection pipe (3) never exceeds 100°C.

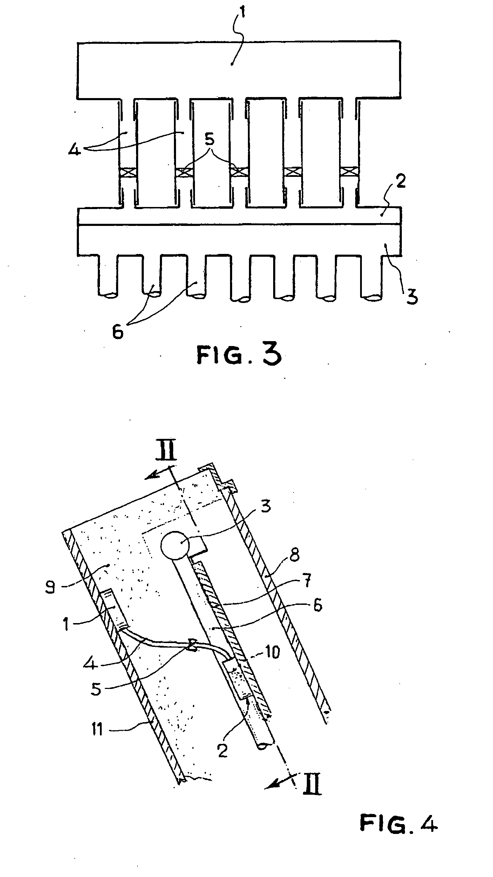

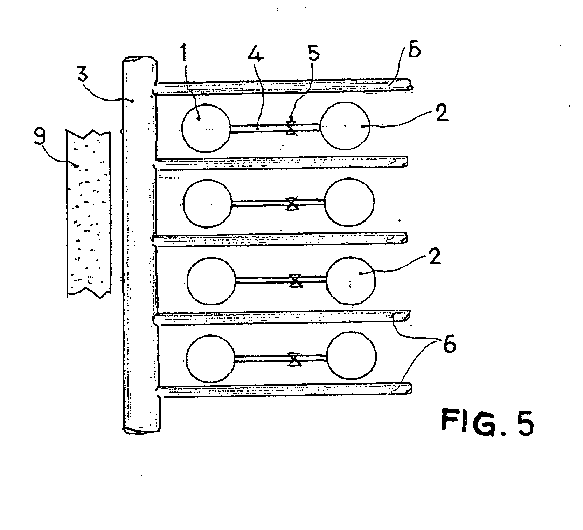

In the case of the dissipators described in figures 4 and 5, these consist of several heat dissipation devices inserted within a solar collector, wherein the evaporation chamber (2) is a hollow cylinder, the base of which has a diameter of around 10 cm and a generatrix of around 3 cm, wherein there is a sufficient amount of water (10) to produce heat dissipation, and which is joined by one of the cylinder bases to the absorbent panel (7). The evaporation chamber (2) is connected to a dissipation pipe (4) with silicone walls, through which the water vapor produced by heat transfer from the absorbent panel (7) to the water (10) in the evaporation chamber (2) flows upwards, and through which the water vapor condensed by the actuation of the condensation chamber (1) flows downwards at the same time, said condensation chamber (1) having another hollow cylinder with a base of a diameter greater than its generatrix, which is joined to the rear panel (11) by one of its bases. The walls of the dissipation pipes (4), due to their silicone-based composition, do not act as a thermal bridge when the Solar Collector functions within its working temperature. As their walls are elastic, these pipes support the slight variations in pressure that may arise and facilitate the assembly process.

In order to ensure the proper functioning of the heat dissipation device, a thermal valve (5) has been added to each dissipation pipe (4) of the dissipation device, as shown in figures 1, 2, 4 and 5, which allows heat to be dissipated when water (10) temperature reaches 100°C and impedes said dissipation, when said temperature is around 60°C. When water temperature reaches 100°C, the evaporation chamber (2) of the heat dissipation device starts functioning, transferring the excess heat to the evaporation chamber (2), causing the evaporation of the water (10) contained therein for its subsequent condensation in the condensation panel (1), in such a manner that the heat is finally transferred to the exterior. This ensures that the temperature inside the heat transporting pipes (6) and the collection pipe (3) never exceeds 100°C.

There are other variants of solar collector heat dissipators, such as different designs, that respect the essentiality of the invention, which we can consider as being obvious to a person skilled in the art.

## Claims

1. A solar collector of the type consisting of:
1a) several heat transporting pipes (6),
1b) a hot water collection pipe (3),
1c) a metal case or a rear panel (11) and
1d) a heat dissipator configured to be inserted within the solar collector **characterized in that** the solar collector comprises:
1e) a tempered glass exterior (8) and
1f) an absorbent panel (7),
and **in that**:
1g) the heat dissipator
1g1) comprises an evaporation chamber (2), wherein water (10) has been introduced, and
1g2) a condensation chamber (1),
1g3) both chambers (1, 2) being connected together by one or several dissipation pipes (4),
1g3a) wherein walls of the dissipation pipes (4) are made of silicone.

2. A solar collector according to claim 1, **characterized in that** the evaporation chamber (2) is disposed eccentrically to the collection pipe (3).

3. A solar collector according to claim 1, **characterized in that** the evaporation chamber (2) is in contact with the absorbent panel (7).

4. A solar collector according to claim 2, **characterized in that** the evaporation chamber (2) is disposed between two heat transporting pipes (6).

5. A solar collector according to the preceding claims, **characterized in that** the evaporation chamber (2) and/or condensation chamber (1) are hollow cylinders.

6. A solar collector according to the preceding claims, **characterized in that** the condensation chamber (1) is in contact with the rear panel (11).

7. A solar collector according to the preceding claims, **characterized in that** each dissipation pipe (4) contains a thermal valve (5).

## Patentansprüche

1. Ein Sonnenkollektor von der Art, die Folgendes umfasst:
1a) mehrere Wärme transportierende Rohre (6),
1b) ein Warmwasser-Sammelrohr (3),
1c) ein Metallgehäuse oder ein rückseitiges Paneel (11) und
1d) einen Wärmeableiter, der dazu ausgelegt ist, in den Sonnenkollektor eingeführt zu werden,
**dadurch gekennzeichnet, dass** der Sonnenkollektor Folgendes umfasst:
1e) ein Äußeres aus Sicherheitsgas (8) und
1f) ein absorbierendes Paneel (7),
sowie dadurch, dass:
1g) der Wärmeableiter
1g1) eine Verdampfungskammer (2) umfasst, in die Wasser (10) eingeführt wurde, und
1g2) eine Kondensierungskammer (1),
1g3) wobei beide Kammern (1, 2) durch ein oder mehrere Dissipationsrohre (4) miteinander verbunden sind,
1g3a) wobei die Wände der Dissipationsrohre 4) aus Silikon gefertigt sind.

2. Ein Sonnenkollektor nach Anspruch 1, **dadurch gekennzeichnet, dass** die Verdampfungskammer (2) exzentrisch zum Sammelrohr (3) angeordnet ist.

3. Ein Sonnenkollektor nach Anspruch 1, **dadurch gekennzeichnet, dass** die Verdampfungskammer (2) in Kontakt mit dem absorbierenden Paneel (7) ist.

4. Ein Sonnenkollektor nach Anspruch 2, **dadurch gekennzeichnet, dass** die Verdampfungskammer (2) zwischen zwei Wärme transportierenden Rohren (6) angeordnet ist.

5. Ein Sonnenkollektor nach einem der vorstehenden Ansprüche, **dadurch gekennzeichnet, dass** die Verdampfungskammer (2) und/oder Kondensierungskammer (1) hohle Zylinder sind.

6. Ein Sonnenkollektor nach einem der vorstehenden Ansprüche, **dadurch gekennzeichnet, dass** die Kondensierungskammer (1) in Kontakt mit dem rückseitigen Paneel (11) ist.

7. Ein Sonnenkollektor nach einem der vorstehenden Ansprüche, **dadurch gekennzeichnet, dass** jedes Dissipationsrohr (4) ein thermisches Ventil (5) enthält.

## Revendications

1. Un collecteur solaire du type consistant en :
1a) plusieurs tuyaux de transfert de chaleur (6).
1b) un tuyau de collecte d'eau chaude (3),
1c) un boîtier métallique ou un panneau arrière (11) et
1d) un dissipateur de chaleur configuré pour être inséré dans le collecteur solaire, **caractérisé en ce que** le collecteur solaire comprend :
1e) une vitre extérieure trempée (8) et
1f) un panneau absorbant (7),
et **en ce que** ;
1g) le dissipateur de chaleur
1g1) comprend une chambre d'évaporation (2), dans laquelle l'eau (10) a été introduite, et
1g2) une chambre de condensation (1),
1g3) les deux chambres (1, 2) étant reliées par un ou plusieurs tuyaux de dissipation (4),
1g3a) dans lesquelles les parois des tuyaux de dissipation (4) sont fabriquées en silicone.

2. Un collecteur solaire selon la revendication 1, **caractérisé en ce que** la chambre d'évaporation (2) est disposée excentriquement par rapport au tuyau de collecte (3).

3. Un collecteur solaire selon la revendication 1, **caractérisé en ce que** la chambre d'évaporation (2) touche le panneau absorbant (7).

4. Un collecteur solaire selon la revendication 2, **caractérisé en ce que** la chambre d'évaporation (2) est disposée entre deux tuyaux de transfert de chaleur (6).

5. Un collecteur solaire selon l'une des revendications précédentes, **caractérisé en ce que** la chambre d'évaporation (2) et / ou la chambre de condensation (1) sont des cylindres creux.

6. Un collecteur solaire selon l'une des revendications précédentes, **caractérisé en ce que** la chambre de condensation (1) touche le panneau arrière (11).

7. Un collecteur solaire selon l'une des revendications précédentes, **caractérisé en ce que** chaque tuyau de dissipation (4) contient une vanne thermique (5).
